# EUROPÄISCHE PATENTANMELDUNG

(11) **EP 4 491 338 A1**
(43) Veröffentlichungstag der Anmeldung: **15.01.2025**
(21) Anmeldenummer: 23184751.8
(22) Anmeldetag: 11.07.2023
(51) Int. Cl.: B25F 5/00, G06V 40/40

(54) **WERKZEUGMASCHINE MIT MINDESTENS EINEM HANDGRIFF UND VERFAHREN ZUR ERKENNUNG EINES VENENMUSTERS EINES NUTZERS DER WERKZEUGMASCHINE**

(71) Anmelder: Hilti Aktiengesellschaft, 9494 Schaan (LI)
(72) Erfinder: Buchner, Dominik, 82383 Hohenpeißenberg (DE)
(74) Vertreter: Hilti Aktiengesellschaft Corporate Intellectual Property

(57) **Zusammenfassung**

Die vorliegende Erfindung betrifft eine Werkzeugmaschine mit mindestens einem Handgriff, wobei die Werkzeugmaschine einen Sensor zur Erkennung eines Venenmusters einer Hand eines Nutzers der Werkzeugmaschine umfasst, wobei der Sensor an oder in einem Bereich des Handgriffs der Werkzeugmaschine angeordnet vorliegt. In einem zweiten Aspekt betrifft die Erfindung ein Verfahren zur Erkennung eines Venenmusters einer Hand eines Nutzers einer Werkzeugmaschine, wobei die Hand des Nutzers so mit Strahlung bestrahlt wird, dass die Hand des Nutzers die einfallende Strahlung gemäß ihres Venenmusters reflektiert, wobei die von der Hand des Nutzers der Werkzeugmaschine reflektierten Strahlung mit einem Sensor erfasst und ein Venenmuster eines Nutzers der Werkzeugmaschine abgeleitet werden kann. Ein besonderer Vorteil der Erfindung besteht darin, dass das mit dem Sensor erkannte Venenmuster einer Hand eines Nutzers der Werkzeugmaschine mit Venenmustern in einer Datenbank verglichen werden kann, um anhand des Venenmusters eine Identität des Nutzers der Werkzeugmaschine zu ermitteln und/oder dem Nutzer eine Vibrationsexposition zuzuordnen.

## Beschreibung

Die vorliegende Erfindung betrifft eine Werkzeugmaschine mit mindestens einem Handgriff, wobei die Werkzeugmaschine einen Sensor zur Erkennung eines Venenmusters einer Hand eines Nutzers der Werkzeugmaschine umfasst, wobei der Sensor an oder in einem Bereich des Handgriffs der Werkzeugmaschine angeordnet vorliegt. In einem zweiten Aspekt betrifft die Erfindung ein Verfahren zur Erkennung eines Venenmusters einer Hand eines Nutzers einer Werkzeugmaschine, wobei die Hand des Nutzers so mit Strahlung bestrahlt wird, dass die Hand des Nutzers die einfallende Strahlung gemäß ihres Venenmusters reflektiert, wobei die von der Hand des Nutzers der Werkzeugmaschine reflektierten Strahlung mit einem Sensor erfasst und ein Venenmuster eines Nutzers der Werkzeugmaschine abgeleitet werden kann. Ein besonderer Vorteil der Erfindung besteht darin, dass das mit dem Sensor erkannte Venenmuster einer Hand eines Nutzers der Werkzeugmaschine mit Venenmustern in einer Datenbank verglichen werden kann, um anhand des Venenmusters eine Identität des Nutzers der Werkzeugmaschine zu ermitteln und/oder dem Nutzer eine Vibrationsexposition zuzuordnen.

### Hintergrund der Erfindung:

Im Bereich der Werkzeugmaschinen sind Dosimeter bekannt, mit denen beispielsweise eine Vibrationsexposition eines Nutzers einer Werkzeugmaschine erfasst werden kann. Dabei handelt es sich häufig um externe körpergetragene Dosimeter, deren Daten von einem Computer oder einem Datensystem ausgewertet werden müssen, um die Vibrationsexposition einem bestimmten Nutzer zuordnen zu können.

Ein solches Vibrationsdosimeter zur Ermittlung der täglichen Vibrationsbelastung von Personen, die an ihrem Arbeitsplatz durch den Betrieb von Werkzeugmaschinen mechanischen Schwingungen ausgesetzt sind, wird beispielsweise in der EP 1 994 381 A1 beschrieben.

Wünschenswert wäre es, wenn beispielsweise für die Auswertung der Vibrationsexposition eine technische, eindeutige Möglichkeit bereitgestellt werden könnte, die Identität eines Nutzers einer Werkzeugmaschine sicher zu erkennen, um die weitere Auswertung und Verarbeitung der Vibrationsexpositionsdaten zu erleichtern.

Diese Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine mit mindestens einem Handgriff vorgesehen. Die Werkzeugmaschine ist dadurch gekennzeichnet, dass die Werkzeugmaschine einen Sensor zur Erkennung eines Venenmusters einer Hand eines Nutzers der Werkzeugmaschine umfasst, wobei der Sensor an oder in einem Bereich des Handgriffs der Werkzeugmaschine angeordnet vorliegt. Die Werkzeugmaschine kann beispielsweise als Bohrhammer, Kernbohrgerät, Meißelgerät, Bohrschrauber und/oder als Trenn- oder Winkelschleifer ausgebildet sein, ohne darauf beschränkt zu sein. Solche Geräte weisen in der Regel mindestens einen Handgriff auf, der von einem Nutzer der Werkzeugmaschine während der Arbeit mit der Werkzeugmaschine umfasst wird. Es sind im Stand der Technik auch solche Werkzeugmaschinen mit zwei oder mehr Handgriffen bekannt. Ein Grundgedanke, der der Erfindung zugrunde liegt, besteht darin, dass der Nutzer den mindestens einen Handgriff während der Arbeit mit der Werkzeugmaschine fest umschließt, wobei Kontakt für eine gewissen Zeit bestehen sollte. Beispielsweise kann mit der Werkzeugmaschine mindestens 3 Sekunden (s), 5 s, 10 s oder 20 s gearbeitet werden, wobei bei dieser Arbeit mit der Werkzeugmaschine eine Venenmuster der Hand des Nutzers der Werkzeugmaschine erkannt wird.

Dazu umfasst die Werkzeugmaschine einen Sensor, der dazu eingerichtet ist, das Venenmuster einer Hand eines Nutzers der Werkzeugmaschine zu erkennen, wobei der Sensor an oder in einem Bereich des Handgriffs der Werkzeugmaschine angeordnet vorliegt. Es ist im Sinne der Erfindung ganz besonders bevorzugt, dass der Sensor zur Erkennung des Venenmusters des Nutzers der Werkzeugmaschine ein infrarotsensitiver Sensor ist. Beispielsweise kann die Hand des Nutzers vor und/oder während der Arbeit mit der Werkzeugmaschine mit einer Strahlungsquelle bestrahlt werden. Bei dieser Strahlungsquelle kann es sich beispielsweise um eine Infrarot-Strahlungsquelle handelt. Eine Infrarot-Strahlungsquelle ist im Sinne der Erfindung bevorzugt dazu eingerichtet, Wärmestrahlung abzugeben, deren Wellenlänge in einem Bereich von ca. 780 Nanometer (nm) bis 1 Millimeter (mm) liegt. Das bedeutet, dass die von der Strahlungsquelle abgegebene Strahlung eine Wellenlänge in einem Bereich von 780·10⁻⁹ m bis 1·10⁻³ m aufweisen kann. Die abgegebene Wärmestrahlung ist Teil des elektromagnetischen Spektrums, wobei sich der Bereich der Infrarot-Strahlung in Richtung größerer Wellenlänge bzw. kleinerer Energien an das sichtbare Licht anschließt. Mit anderen Worten hat Infrarot-Strahlung in der Regel eine größere Wellenlänge, aber weniger Energie als sichtbares Licht. Die von der Strahlungsquelle abgegebene Infrarot-Strahlung ist daher auch nicht gefährlich für den Nutzer der Werkzeugmaschine, sondern wird viel eher als angenehm und wohltuend empfunden. In einer ganz besonders bevorzugten Ausgestaltung der Erfindung kann die Hand des Nutzers der Werkzeugmaschine mit Infrarotstrahlung bestrahlt werden, um ein auf Reflexion der Infrarot-strahlung basierendes Abbild des Venenmusters der Hand des Nutzers der Werkzeugmaschine zu erfassen.

Es ist im Sinne der Erfindung bevorzugt, dass die Werkzeugmaschine eine Strahlungsquelle umfasst, deren Strahlung reflektiert und für die Erkennung des Venenmusters ausgewertet wird. Die Strahlungsquelle kann vorzugsweise von einer Leuchtdiode (Light Emitting Diode, LED) gebildet werden oder eine Leuchtdiode umfassen, wobei die Leuchtdiode vorzugsweise dazu eingerichtet, Strahlung im Infrarot-Wellenlängenbereich abzugeben. Mithin kann die Strahlungsquelle, die im Kontext der vorliegenden Erfindung verwendet wird, als Infrarot-Strahlungsquelle bezeichnet werden, wobei die Infrarot-Strahlungsquelle vorzugsweise dazu eingerichtet ist, Wärmestrahlung abzugeben, deren Wellenlänge in einem Bereich von ca. 780 Nanometer (nm) bis 1 Millimeter (mm) liegt. Es ist im Sinne der Erfindung bevorzugt, dass die Strahlungsquelle und der Sensor eine Baugruppe bilden, wobei die Baugruppe vorzugsweise im Handgriff der Werkzeugmaschine oder in räumlicher Nähe zu dem Handgriff der Werkzeugmaschine angeordnet vorliegt. Die Bestrahlung kann beispielsweise einmalig bei Betätigung bzw. zu Beginn des Arbeitsvorgangs mit der Werkzeugmaschine durchgeführt werden. Dadurch kann vorteilhafterweise auf eine kontinuierliche Bestrahlung während des gesamten Arbeitsvorgangs mit der Werkzeugmaschine verzichtet werden.

Es ist im Sinne der Erfindung bevorzugt, dass die Hand des Nutzers der Werkzeugmaschine mit Infrarotstrahlung bestrahlt wird, um ein auf Reflexion der Infrarotstrahlung basierendes Abbild des Venenmusters der Hand des Nutzers der Werkzeugmaschine zu erfassen. Wenn die Hand des Nutzers der Werkzeugmaschine der Strahlung bestrahlt wird, reflektiert die Hand des Nutzers der Werkzeugmaschine die Strahlung, wobei diese Reflexion von der Beschaffenheit des Venenmusters der Hand des Nutzers der Werkzeugmaschine abhängt. Anhand der von der Hand des Nutzers der Werkzeugmaschine reflektierten Strahlung können vorteilhafterweise Rückschlüsse auf das Venenmusters des Nutzers der Werkzeugmaschine gezogen werden. Es hat sich gezeigt, dass das Venenmuster eines Menschen ähnlich eindeutig zugeordnet werden kann, wie sein Fingerabdruck. Auf diese Weise ermöglicht die Erfassung und Auswertung der reflektierten Strahlung der Hand des Nutzers der Werkzeugmaschine eine eindeutige Zuordnung des Venenmusters zu einer konkreten Person bzw. ihrer Identität. Eine solche Zuordnung des Venenmusters zu einer konkreten Person bzw. ihrer Identität wird insbesondere dadurch ermöglicht, dass das mit dem Sensor erkannte Venenmuster einer Hand eines Nutzers der Werkzeugmaschine mit Venenmustern in einer Datenbank verglichen wird. In der Datenbank können eine Vielzahl von Personen und ihre Venenmuster hinterlegt sein, so dass anhand des Venenmusters eine Identität des Nutzers der Werkzeugmaschine ermittelt werden kann. Die Datenbank kann beispielsweise in der Werkzeugmaschine hinterlegt sein. Dazu kann die Werkzeugmaschine beispielsweise eine Steuereinrichtung und/oder eine Speichervorrichtung umfassen. Die Zuordnung des Venenmusters zu einer konkreten Person bzw. ihrer Identität kann insbesondere von der Steuereinrichtung vorgenommen werden, wobei die Steuereinrichtung beispielsweise auf die Datenbank zugreifen kann, die zum Beispiel in der Speichervorrichtung der Werkzeugmaschine abgelegt sein kann. Es ist im Sinne der Erfindung bevorzugt, dass die Werkzeugmaschine eine Speichervorrichtung zur Hinterlegung der Datenbank umfasst. Alternativ oder ergänzen können in der Speichervorrichtung die mit dem Sensor erfassten Daten hinterlegt bzw. abgespeichert werden. Selbstverständlich kann die Datenbank auch auf einem externen Gerät, wie einem Handy, Laptop, Notebook, PC oder eine sonstigen mobilen Kommunikationsvorrichtung hinterlegt sein. Alternativ oder ergänzend kann die Datenbank auf einem Server oder in einer Cloud hinterlegt sein. Zwischen der Datenbank und der Werkzeugmaschine kann eine Kommunikationsverbindung bestehen, wobei die Kommunikationsverbindung vorzugsweise drahtgebunden und/oder drahtlos ausgebildet ist.

Ein wesentlicher Vorteil der Erfindung besteht darin, dass mit der Erfindung eine technische, eindeutige Möglichkeit bereitgestellt werden kann, die Identität eines Nutzers einer Werkzeugmaschine zu bestimmen. Dieser Identität des Nutzers der Werkzeugmaschine kann anschließend eine Vibrationsexposition zugeordnet werden.

Durch die Zuordnung der Vibrationsexposition zu einer Identität eines Nutzers der Werkzeugmaschine kann die weitere Auswertung und Verarbeitung der Vibrationsexpositionsdaten erheblich erleichtert oder effektiver gestaltet werden. Beispielsweise kann ein Betrieb der Werkzeugmaschine veranlasst werden, wenn festgestellt wird, dass eine Vibrationsexposition über einem vorgegebenen Grenzwert liegt. Alternativ oder ergänzend kann der Nutzer der Werkzeugmaschine ein Signal erhalten, wenn sich seine persönliche Vibrationsexposition einem solchen Grenzwert nähert. Das Signal kann beispielsweise optisch, akustisch oder haptisch sein, ohne darauf beschränkt zu sein.

Es ist im Sinne der Erfindung bevorzugt, dass der Handgriff der Werkzeugmaschine ein durchsichtiges Fenster aufweist, um Strahlung zum Sensor durchzulassen. Dabei kann es sich beispielsweise um solche Strahlung handeln, die das Venenmuster der Hand des Nutzers beschreibt. Diese Strahlung, die das Venenmuster der Hand des Nutzers beschreibt, entspricht vorzugsweise der Strahlung, die von der Hand des Nutzers der Werkzeugmaschine reflektiert wird.

Diese Reflexion ist vorzugsweise abhängig von dem Venenmusters der Hand des Nutzers der Werkzeugmaschine, so dass anhand der reflektierte Strahlung Rückschlüsse auf das Venenmuster des Nutzers der Werkzeugmaschine gezogen werden können. Vorzugsweise kann das eindeutige Venenmusters des Nutzers der Werkzeugmaschine von den Reflexionsdaten bzw. der reflektierten Strahlung abgeleitet werden, wobei diese Ableitung vorzugsweise mit Hilfe einer Steuereinrichtung der Werkzeugmaschine erfolgt. Die von der Hand des Nutzers der Werkzeugmaschine reflektierte Strahlung fällt vorzugsweise durch ein durchsichtiges Fenster, das am oder in einem Bereich des Handgriffs der Werkzeugmaschine angeordnet vorliegt. Das Fenster umfasst insbesondere solches Material, das für Infrarot-Strahlung durchsichtig ist. Mit anderen Worten kann insbesondere Infrarot-Strahlung das durchsichtige Fenster durchdringen, so dass die von der Hand des Nutzers der Werkzeugmaschine reflektierte Strahlung von der Hand durch das Fenster auf den Sensor fallen kann, wo die Reflexionsdaten bzw. die reflektierte Strahlung ausgewertet wird, um ein vorzugsweise eindeutiges Venenmuster zu erkennen. Es ist im Sinne der Erfindung bevorzugt, dass das durchsichtige Fenster dazu eingerichtet ist, Strahlung durchzulassen, um ein auf Reflexion der Strahlung basierendes Abbild des Venenmusters der Hand des Nutzers der Werkzeugmaschine zu erfassen.

Das durchsichtige Fenster kann allerdings auch die ursprüngliche, von der Strahlungsquelle kommende Strahlung zum Sensor durchlassen. Aus dem Vergleich zwischen der unveränderten, ursprünglichen Strahlung und der reflektierten Strahlung kann das Venenmuster des Nutzers der Werkzeugmaschine ermittelt bzw. abgeleitet werden.

In einem zweiten Aspekt betrifft die Erfindung ein Verfahren zur Erkennung eines Venenmusters einer Hand eines Nutzers einer Werkzeugmaschine. Die für die Werkzeugmaschine eingeführten Begriffe, Definitionen und technischen Vorteile gelten vorzugsweise für das Verfahren analog. Das Erkennungsverfahren ist durch folgende Verfahrensschritte gekennzeichnet:
a) Bereitstellung einer Werkzeugmaschine mit mindestens einem Handgriff,
b) Bestrahlung der Hand des Nutzers der Werkzeugmaschine mit Strahlung, wobei die Hand des Nutzers die einfallende Strahlung gemäß ihres Venenmusters reflektiert,
c) Erfassung der von der Hand des Nutzers der Werkzeugmaschine reflektierten Strahlung mit einem Sensor,
d) Ableitung eines Venenmusters aus der reflektierten Strahlung, wobei das Venenmuster eindeutig einem Nutzer der Werkzeugmaschine zugeordnet werden kann.

Mit der Erfindung kann vorteilhafterweise ein Venenmuster einem Nutzer der Werkzeugmaschine eindeutig zugeordnet werden, Dadurch können andere Daten, die den Betrieb einer Werkzeugmaschine charakterisieren oder beschreiben, konkret einem Nutzer zugeordnet werden. Eine solche automatische oder technische Zuordnung ist vorteilhaft, weil dadurch die Weiterverarbeitung - beispielsweise von Vibrationsexpositionsdaten - erheblich vereinfacht oder effektiver gestaltet werden kann. Außerdem ist eine automatische oder technische Zuordnung weniger fehleranfällig. Bisher wurden oft die Daten einzelner Vibrationsdosimeter ausgewertet, wobei es beispielweise vor der Auswertung zu Verwechslungen oder falschen Zuordnungen der Dosimeter-Geräte zu einzelnen Nutzern kommen konnte. Solche Fehler bzw. Fehlerquellen werden mit der vorliegenden Erfindung vorteilhafterweise vermieden, weil keine externen Geräte, wie körpergetragene Vibrationsdosimeter, mehr ausgewertet werden müssen, sondern die Feststellung einer Identität eines Nutzers der Werkzeugmaschine vorteilhafterweise basierend auf einem charakteristischen Venenmusters des Nutzers erfolgt.

Die Erfassung der von der Hand des Nutzers der Werkzeugmaschine reflektierten Strahlung kann vorzugsweise mit dem Sensor der Werkzeugmaschine erfolgen, wobei der Sensor insbesondere in einem Handgriff der Werkzeugmaschine angeordnet sein kann. Es ist im Sinne der Erfindung bevorzugt, dass es sich bei der Strahlung um Infrarotstrahlung handelt. Diese Infrarotstrahlung kann von einer Strahlungsquelle erzeugt werden, wobei die Strahlung auf die Hand eines Nutzers der Werkzeugmaschine gerichtet wird. Dort kann die Strahlung von der Hand reflektiert werden, wobei der Erfindung erkannt hat, dass diese Reflexion von dem Venenmuster der Hand abhängt. Dadurch entspricht die reflektierte Strahlung dem Venenmuster der Hand des Nutzers der Werkzeugmaschine bzw. sie reflektierte Strahlung stellt ein Abbild dieses Venenmusters dar. Es ist im Sinne der Erfindung bevorzugt, dass die reflektierte Strahlung durch ein durchsichtiges Fenster am Handgriff der Werkzeugmaschine fällt, um zum Sensor der Werkzeugmaschine zu gelangen. Es ist im Sinne der Erfindung bevorzugt, dass das durchsichtige Fenster an oder in einem Bereich des Handgriffs der Werkzeugmaschine angeordnet vorliegt. Das durchsichtige Fenster kann allerdings auch die ursprüngliche, von der Strahlungsquelle kommende Strahlung zum Sensor durchlassen. Aus dem Vergleich zwischen der unveränderten, ursprünglichen Strahlung und der reflektierten Strahlung kann das Venenmuster des Nutzers der Werkzeugmaschine ermittelt bzw. abgeleitet werden.

Es ist im Sinne der Erfindung bevorzugt, dass die von dem Sensor erfassten Venenmuster-Daten mit einer Datenbank verglichen werden, um anhand des Venenmusters eine Identität des Nutzers der Werkzeugmaschine zu ermitteln und/oder dem Nutzer eine Vibrationsexposition zuzuordnen. Die Datenbank kann lokal auf der Werkzeugmaschine, auf einem externen Gerät oder auf einem Server oder in einer Cloud hinterlegt sein, ohne darauf beschränkt zu sein.

Die Bestrahlung der Hand des Nutzers der Werkzeugmaschine und die Auswertung der reflektierten Strahlung zur Ermittlung des Hand-Venenmusters des Nutzers kann im Kontext der Erfindung vorzugsweise kontinuierlich erfolgen. Es kann aber im Sinne der Erfindung auch bevorzugt sein, dass die Bestrahlung der Hand des Nutzers der Werkzeugmaschine und die Auswertung der reflektierten Strahlung in regelmäßigen Abständen erfolgen. Solche regelmäßigen Intervalle können beispielsweise in einem Bereich von 0,01 bis 1 Hertz (Hz) liegen. Beispielsweise kann eine Bestrahlung der Hand des Nutzers der Werkzeugmaschine und die Auswertung der reflektierten Strahlung zur Ermittlung des Hand-Venenmusters des Nutzers zu Beginn des Arbeitsvorgangs mit der Werkzeugmaschine durchgeführt werden. Die Bestrahlung der Hand des Nutzers der Werkzeugmaschine und die Auswertung der reflektierten Strahlung zur Ermittlung des Hand-Venenmusters des Nutzers können im Sinne der Erfindung bevorzugt als «Anfrage» bezeichnet werden, wobei eine solche Anfrage zu Beginn des Arbeitsvorgangs mit der Werkzeugmaschine einmalig oder mehrmalig erfolgen kann. Wenn die Abfrage mehrmals erfolgt, kann sie beispielsweise mit einer Frequenz in einem Bereich von 0,1 bis 1 Hertz (Hz) liegen. Während des Betriebs der Werkzeugmaschine kann die Abfrage beispielsweise mit einer Frequenz von ca. 0,01 Hz wiederholt werden.

In einer ganz besonders bevorzugten Ausgestaltung der Erfindung kann ein Betrieb der Werkzeugmaschine blockiert werden, wenn das erkannte Venenmuster nicht mit mindestens einem Mitglied einer in einer Datenbank enthaltenen Gruppe von Venenmustern übereinstimmt. Die Werkzeugmaschine geht in diesem Fall davon aus, dass die Werkzeugmaschine in unbefugte oder "falsche" Hände geraten ist. Auf diese Weise kann mit der Erfindung und der Zuordnung eines Venenmusters zu einem befugten Nutzer der Werkzeugmaschine ein wirksamer Diebstahlschutz bereitgestellt werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung des vorgeschlagenen Verfahrens zur Erkennung eines Venenmusters
- Fig. 2: Detailansicht eines Handgriffes einer bevorzugten Ausgestaltung der vorgeschlagenen Werkzeugmaschine
- Fig. 3: Ansicht einer bevorzugten Ausgestaltung der vorgeschlagenen Werkzeugmaschine

### Ausführungsbeispiele und Figurenbeschreibung:

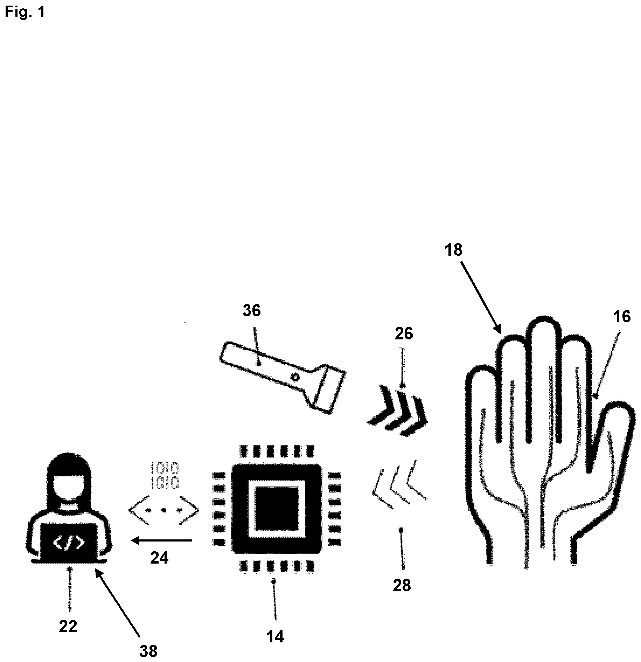

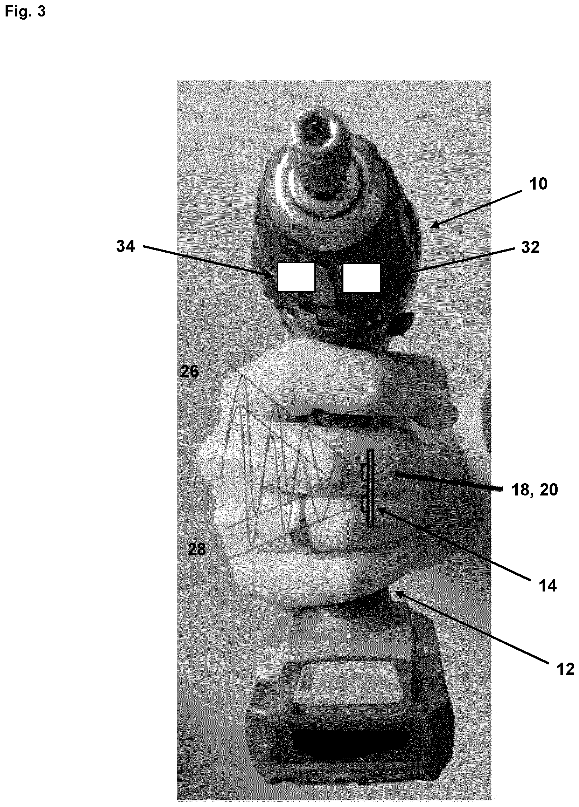

Figur 1 zeigt eine bevorzugte Ausgestaltung des vorgeschlagenen Verfahrens zur Erkennung eines Venenmusters 16. Die Strahlung 26, 28, die zur Erkennung des Venenmusters 16 der Hand 18 eines Nutzers (20, siehe Figur 3) verwendet wird, kann von einer Strahlungsquelle 36 abgegeben, die in Fig. 1 schematisch dargestellt ist. Mit der Strahlungsquelle 36 kann die Hand 18 des Nutzers 20 der Werkzeugmaschine (10, siehe ebenfalls Fig. 3) bestrahlt werden, wobei die Hand 18 des Nutzers 20 diese einfallende Strahlung 26 reflektiert. Die reflektierte Strahlung trägt das Bezugszeichen 28. Die einfallende Strahlung 26, die von der Strahlungsquelle 36 kommet, und die reflektierte Strahlung 28 unterscheiden sich, wobei der Unterschied auf das Venenmusters 16 der Hand 18 des Nutzers 20 der Werkzeugmaschine 10 zurückzuführen ist. Die Venen in der Hand 18 des Nutzers 20 reflektieren die einfallende Strahlung 26 auf eine andere Weise wie das umliegende Gewebe, so dass basierend auf der reflektierten Strahlung 28 ein Venenmuster 16 des Nutzers 20 der Werkzeugmaschine 10 ermittelt bzw. abgeleitet werden kann. Dieses Venenmuster 16 ist einzigartig, ähnlich wie ein Fingerabdruck. Daher kann das erkannte Venenmuster 16 verwendet werden, um das Venenmuster 16 einer konkreten Person, beispielsweise einem konkreten Nutzers 20 der Werkzeugmaschine 10 zuzuordnen.

Die Erkennung der reflektierten Strahlung 28 erfolgt mit Hilfe eines Sensors 14, der beispielsweise im oder an einem Handgriff 12 der Werkzeugmaschine 10 angeordnet vorliegen kann. Der Sensor 14 ist vorzugsweise dazu eingerichtet, die ursprünglich von der Strahlungsquelle 36 kommenden Strahlung 26, sowie die reflektierte Strahlung 28 zu erfassen und zu vergleichen. Aufgrund dieses Vergleichs zwischen der einfallenden Strahlung 26 und der reflektierten Strahlung 28 können die Unterschiede zwischen einfallender Strahlung 26 und ausfallender Strahlung 28 ermittelt werden und basierend auf diesen Unterschieden ein Venenmuster 16 abgeleitet werden. Das ermittelte Venenmuster 16 kann mit bekannten Venenmustern 16' verglichen werden, die in einer Datenbank 22 hinterlegt sind. Die Datenbank 22 kann in der Werkzeugmaschine 10 hinterlegt sein. Die Datenbank 22 kann aber auch auf einem externen Gerät 38 oder in einer Daten-Cloud (nicht dargestellt) oder auf einem Server (nicht dargestellt) hinterlegt sein. Durch den Vergleich zwischen dem erfassten Venenmuster 16 und den hinterlegten Venenmustern 16' kann eine Identität des Nutzers 20 der Werkzeugmaschine 10 eindeutig ermittelt werden. Zwischen der Werkzeugmaschine 10 und der Datenbank 22 kann eine Kommunikationsverbindung 24 bestehen, wobei die Kommunikationsverbindung 24 drahtlos und/oder drahtgebunden ausgestaltet sein kann. Mit anderen Worten können Daten zwischen der Werkzeugmaschine 10 und der Datenbank 22 drahtgebunden, beispielsweise über ein Kabel, oder drahtlos, beispielsweise über eine Near Field Communication- oder Bluetooth-Verbindung, ausgetauscht werden.

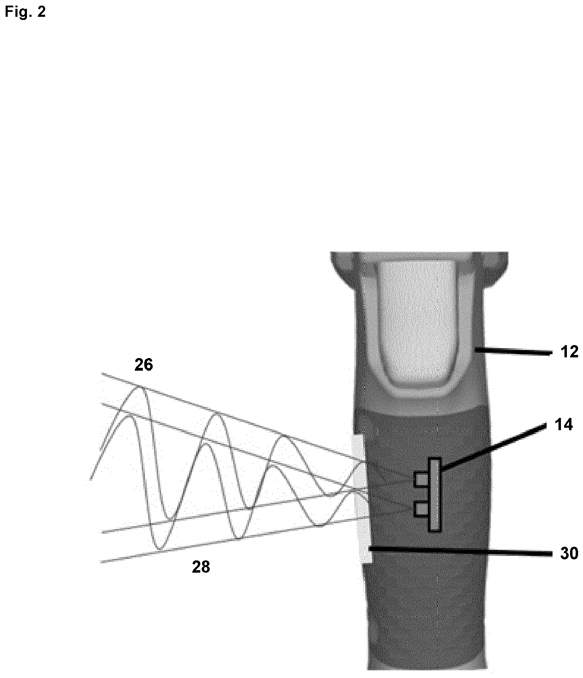

Fig. 2 zeigt eine Detailansicht eines Handgriffes 12 einer bevorzugten Ausgestaltung der vorgeschlagenen Werkzeugmaschine 10. Dargestellt ist ein Sensor 14 zur Erfassung der Strahlung 26, 28 bzw. zur Ermittlung des Venenmusters 16, sowie das durchsichtige Fenster 30, durch das die Strahlung 26, 28 fällt, um zum Sensor 14 zu gelangen. In Fig. 2 sind beispielhafte Positionen des Sensors 14 und des durchsichtigen Fensters 30 am Handgriff 12 der Werkzeugmaschine 10 dargestellt. Selbstverständlich können der Sensor 14 und das Fenster 30 auch an anderen Stellen des Handgriffs 12 der Werkzeugmaschine vorgesehen sein.

Fig. 3 zeigt eine bevorzugte Ausgestaltung der vorgeschlagenen Werkzeugmaschine 10. Zu sehen ist insbesondere der Handgriff 12 der Werkzeugmaschine 10, sowie der Sensor 14 zur Erfassung des Venenmusters 16. Die Werkzeugmaschine 10 kann eine batteriebetriebene Werkzeugmaschine 10 mit Batterie (siehe unten, ohne Bezugszeichen) oder eine netzbetriebene Werkzeugmaschine 10 sein. Die Werkzeugmaschine 10 kann eine Steuereinrichtung 32 aufweisen, mit der die Daten, die mit dem Sensor 14 ermittelt werden, ausgewertet werden können. Darüber hinaus kann die Werkzeugmaschine 10 eine Speichereinrichtung 34 aufweisen, in der die Daten oder die Datenbank 22 hinterlegt sein können. Es sei angemerkt, dass die Positionen der Steuereinrichtung 32 und der Speichervorrichtung 34 in Figur 3 schematisch dargestellt sind. Selbstverständnis können die Steuereinrichtung 32 und die Speichervorrichtung 34 an vielen anderen Orten an der Werkzeugmaschine 10 angeordnet vorliegen. Der Sensor 14 ist vorzugsweise dazu eingerichtet, sowohl die einfallende, direkt von der Strahlungsquelle 36 stammende Strahlung 26, als auch die reflektierte Strahlung 28, die von dem Venenmuster 16 der Hand 18 des Nutzers 20 der Werkzeugmaschine 10 verändert wird, zu erfassen.

### Bezugszeichenliste

- 10: Werkzeugmaschine
- 12: Handgriff der Werkzeugmaschine
- 14: Sensor
- 16: Venenmuster
- 18: Hand
- 20: Nutzer
- 22: Datenbank
- 24: Kommunikationsverbindung
- 26: einfallende Strahlung
- 28: reflektierte Strahlung
- 30: durchsichtiges Fenster
- 32: Steuereinrichtung
- 34: Speichervorrichtung
- 36: Strahlungsquelle
- 38: externes Gerät

## Patentansprüche

1. Werkzeugmaschine (10) mit mindestens einem Handgriff (12)
**dadurch gekennzeichnet, dass**
die Werkzeugmaschine (10) einen Sensor (14) zur Erkennung eines Venenmusters (16) einer Hand (18) eines Nutzers (20) der Werkzeugmaschine (10) umfasst, wobei der Sensor (14) an oder in einem Bereich des Handgriffs (12) der Werkzeugmaschine (10) angeordnet vorliegt.

2. Werkzeugmaschine (10) nach Anspruch 1
**dadurch gekennzeichnet, dass**
das mit dem Sensor (14) erkannte Venenmuster (16) einer Hand (18) eines Nutzers (20) der Werkzeugmaschine (10) mit Venenmustern (16') in einer Datenbank (22) verglichen werden, um anhand des Venenmusters (16) eine Identität des Nutzers (20) der Werkzeugmaschine (10) zu ermitteln und/oder dem Nutzer (20) eine Vibrationsexposition zuzuordnen.

3. Werkzeugmaschine (10) nach Anspruch 1 oder 2
**dadurch gekennzeichnet, dass**
zwischen der Werkzeugmaschine (10) und der Datenbank (22) eine Kommunikationsverbindung (24) besteht.

4. Werkzeugmaschine (10) nach einem der vorhergehenden Ansprüche
**dadurch gekennzeichnet, dass**
die Hand (18) des Nutzers (20) der Werkzeugmaschine (10) mit Strahlung (26) bestrahlt wird, um ein auf Reflexion (28) der Strahlung (26) basierendes Abbild des Venenmusters (16) der Hand (18) des Nutzers (20) der Werkzeugmaschine (10) zu erfassen.

5. Werkzeugmaschine (10) nach Anspruch 4
**dadurch gekennzeichnet, dass**
die es sich bei der Strahlung (26, 28) um Infrarotstrahlung handelt.

6. Werkzeugmaschine (10) nach einem der vorhergehenden Ansprüche
**dadurch gekennzeichnet, dass**
der Handgriff (12) der Werkzeugmaschine (10) ein durchsichtiges Fenster (30) aufweist, um Strahlung (26, 28) zum Sensor (14) durchzulassen.

7. Werkzeugmaschine (10) nach einem der vorhergehenden Ansprüche
**dadurch gekennzeichnet, dass**
der Sensor (14) zur Erkennung eines Venenmusters (16) einer Hand (18) eines Nutzers (20) der Werkzeugmaschine (10) ein infrarotsensitiver Sensor ist.

8. Werkzeugmaschine (10) nach einem der vorhergehenden Ansprüche
**dadurch gekennzeichnet, dass**
die Werkzeugmaschine (10) eine Steuereinrichtung (32) zur Auswertung der mit dem Sensor (14) erfassten Daten umfasst.

9. Werkzeugmaschine (10) nach einem der vorhergehenden Ansprüche
**dadurch gekennzeichnet, dass**
die Werkzeugmaschine (10) eine Speichervorrichtung (34) zur Hinterlegung der Datenbank (22) und/oder der mit dem Sensor (14) erfassten Daten umfasst.

10. Verfahren zur Erkennung eines Venenmusters (16) einer Hand (18) eines Nutzers (20) einer Werkzeugmaschine (10)
**gekennzeichnet durch die folgenden Verfahrensschritte:**
a) Bereitstellung einer Werkzeugmaschine (10) mit mindestens einem Handgriff (12),
b) Bestrahlung der Hand (18) eines Nutzers (20) der Werkzeugmaschine (10) mit Strahlung (26), wobei die Hand (18) des Nutzers (20) die einfallende Strahlung (26) gemäß ihres Venenmusters (16) reflektiert (28),
c) Erfassung der von der Hand (18) des Nutzers (20) der Werkzeugmaschine (10) reflektierten Strahlung (28) mit einem Sensor (14),
d) Ableitung eines Venenmusters (16) der Hand (18) des Nutzers (20) aus der reflektierten Strahlung (28), wobei das Venenmuster (16) eindeutig einem Nutzer (20) der Werkzeugmaschine (10) zugeordnet werden kann.

11. Verfahren nach Anspruch 10
**dadurch gekennzeichnet, dass**
die Strahlung (26, 28) durch ein durchsichtiges Fenster (30) der Werkzeugmaschine (10) fällt, um zum Sensor (14) zu gelangen.

12. Verfahren nach Anspruch 11
**dadurch gekennzeichnet, dass**
das durchsichtige Fenster (30) an oder in einem Bereich des Handgriffs (12) der Werkzeugmaschine (10) angeordnet vorliegt.

13. Verfahren nach einem der Ansprüche 10 bis 12
**dadurch gekennzeichnet, dass**
die von dem Sensor (14) erfassten Venenmuster-Daten mit einer Datenbank (22) verglichen werden, um anhand des Venenmusters (16) eine Identität des Nutzers (20) der Werkzeugmaschine (10) zu ermitteln und/oder dem Nutzer (20) eine Vibrationsexposition zuzuordnen.

14. Verfahren nach einem der Ansprüche 10 bis 13
**dadurch gekennzeichnet, dass**
ein Betrieb der Werkzeugmaschine (10) blockiert wird, wenn das erkannte Venenmuster (16) nicht mit mindestens einem Mitglied einer in einer Datenbank (22) enthaltenen Gruppe von Venenmustern (16') übereinstimmt.

15. Verfahren nach einem der Ansprüche 10 bis 14
**dadurch gekennzeichnet, dass**
die Strahlung (26) mit einer Strahlungsquelle (36) erzeugt wird.
